Europäisches Patentamt

European Patent Office

Office européen des brevets

(11) Numéro de publication: **0 494 820 B1**

# FASCICULE DE BREVET EUROPEEN

(45) Date de publication de fascicule du brevet: **28.06.95** (51) Int. Cl.6: **A01G 31/02**

(21) Numéro de dépôt: **92400039.1**

(22) Date de dépôt: **08.01.92**

(54) **Perfectionnement à la production de plants de tabac selon le système par flottation.**

(30) Priorité: **10.01.91 FR 9100227**

(43) Date de publication de la demande:
**15.07.92 Bulletin 92/29**

(45) Mention de la délivrance du brevet:
**28.06.95 Bulletin 95/26**

(84) Etats contractants désignés:
**AT BE CH DE DK ES FR GB GR IT LI LU NL PT**

(56) Documents cités:
**WO-A-89/00807
LU-A- 37 721
US-A- 4 248 013
US-A- 4 312 152**

**The Carolina Farmer, Nov. 1987, édition Carolina Greenhouse Plants Inc.**

(73) Titulaire: **SOCIETE NATIONALE D'EXPLOITA-
TION INDUSTRIELLE DES TABACS ET ALLU-
METTES
53, quai d'Orsay
F-75340 Paris Cedex 07 (FR)**

(72) Inventeur: **Tancogne, Jacques
La Gueyte
F-24100 Bergerac (FR)**

(74) Mandataire: **Bloch, Gérard et al
2, square de l'Avenue du Bois
F-75116 Paris (FR)**

Rank Xerox (UK) Business Services
(3.10/3.09/3.3.3)

**Description**

Dans les procédés connus, les graines ou les plantules de tabac sont disposées ou plantées en mini-mottes ou sur couche traditionnelle d'un mélange généralement de terreau et de sable, enrichi en éléments nutritifs, puis sont humidifiées à intervalles réguliers par de l'eau chargée d'éléments nutritifs pour leur permettre d'atteindre le stade de développement permettant leur repiquage.

Or, au moment où le plant est apte à être transplanté, les conditions climatiques peuvent être défavorables : terrain gorgé d'eau empêchant sa préparation et l'usage des transplanteuses mécaniques ou température trop élevée entraînant une brûlure des feuilles des jeunes plants. Il est très difficile voire impossible de maintenir le plant dans cet état.

En vue d'obtenir un développement plus uniforme et une meilleure reprise à la plantation et de réduire la demande en personnel, on a proposé depuis quelques années aux Etats-Unis notamment dans un article de la revue "The Carolina Farmer" de novembre 1987 éditée par "Carolina Greenhouse Plants, Inc."une technique de production selon laquelle les mini-mottes contenant les plantules sont placées dans les alvéoles d'un plateau qui flotte en permanence sur un bac contenant de l'eau et des éléments nutritifs, le niveau d'eau dans le bac étant maintenu constant par apport régulier d'eau et d'éléments nutritifs.

Ce procédé dit des "semis flottants" ne permet pas plus que les procédés antérieurs, le contrôle de la croissance du plant en phase de repiquage.

Pour permettre ce contrôle, l'invention prévoit d'appliquer le procédé ci-dessus, mais où l'eau du bac contient initialement la quantité totale de matière nutritive nécessaire au développement de la plante jusqu'à sa transplantation, le niveau de liquide dans le bac étant maintenu constant par apport d'eau uniquement.

L'expérience a montré que les plantes obtenues à partir des plants produits par le procédé de l'invention ont un développement normal et une croissance comparable à celle obtenue par les méthodes antérieures, mais ce procédé présente plusieurs avantages par rapport à celles-ci. Il permet, en particulier un parfait contrôle de la croissance du plant, en adaptant bien les teneurs en azote minéral, et d'attendre, par conséquent, des conditions climatiques favorables pour le transplanter dans un état convenable.

Ce procédé est très simple à mettre en oeuvre et ne nécessite aucune main d'oeuvre de haute technicité. L'apport en élément nutritif est fait en une seule fois en début de production (et éventuellement en fin) sous une forme qui peut être très simple, et permet, par exemple, l'utilisation d'une solution nutritive concentrée en quantité adaptée au nombre de plantes à nourrir.

L'eau d'apport dans le bac est avantageusement d'une teneur aussi faible que possible en azote minéral et en principe inférieure à 10 mg/l.

De telles solutions nutritives peuvent être préparées à l'avance en un certain nombre de concentrations pour être mises à la disposition des utilisateurs du procédé de l'invention.

La mise en oeuvre du procédé est décrite ci-après, à titre d'exemple.

La mini-motte contenant le plant obtenu par semis direct, ou repiquage de plantules, est composée d'un support inerte, organique ou synthétique, par exemple un mélange de tourbe et de sable. Elle ne contient pas d'élément azoté ou sa teneur en azote minéral est faible et connue en principe inférieure à 35 mg/l de terreau.

La mini-motte est avantageusement constituée directement dans un alvéole du plateau "flotteur" qui est placé sur un bac rempli d'eau enrichi de la solution nutritive.

Le procédé de l'invention a été mis en oeuvre à différentes concentrations initiales de la solution nutritive allant de 2 à 12 milliéquivalents d'azote par litre d'eau du bac, par exemple une concentration $C_1$ correspondant à 4 milliéquivalents (4 meq N/l), une concentration $C_2$ correspondant à 6 meq N/l et une concentration $C_3$ correspondant à 8 meq N/l.

On a constaté que les plants obtenus avec des concentrations supérieures à 8 meq N/l se développaient d'une manière non contrôlable, c'est-à-dire dépassent la taille optimale pour la transplantation. Par contre les concentrations inférieures à 4 meq N/l ne permettent pas d'obtenir un plant d'un développement suffisant.

A titre d'exemple est indiquée ci-après la composition d'une solution nutritive en éléments principaux et en oligo-éléments, correspondant à la concentration $C_2$ (6 meq N/l) :

| Eléments principaux | |
|---|---|
| nitrate d'ammonium | 40 mg/l |
| nitrate de potassium | 505,55 mg/l |
| sulfate de potassium | 174,25 mg/l |
| chlorure de potassium | 37,25 mg/l |
| sodium dihydrogénophosphate à 2 molécules d'eau | 390,03 mg/l |

| Oligo-éléments | |
|---|---|
| acide borique | 3 mg/l |
| sulfate manganèse | 3 mg/l |
| sulfate zinc | 1 mg/l |
| sulfate cuivre | 0,5 mg/l |
| Fe EDTA (acide éthylènedinitro-tétracétique sel de sodium-fer | 10 mg/l |
| heptamolybdate d'ammonium-tétrahydraté | 9,2 g/l |

Pour des concentrations différentes en azote, il suffit de faire varier en conséquence la teneur en nitrate de potassium.

On peut pratiquement tolérer des variations des teneurs en éléments de ±20 %.

L'étude comparative du comportement au champ des transplants produits, à partir d'une même variété de tabac dite "ITB 30", à des concentrations $C_1$, $C_2$ et $C_3$ et des plants produits par culture traditionnelle en mini-mottes (Te*), c'est-à-dire sur support ne contenant qu'une partie des éléments nutritifs nécessaires, qui sont complétés au fur et à mesure par arrosage ou apport dans l'eau de flottation, a donné les résultats suivants :

| Traitement | $Te^*$ | $C_1$ | $C_2$ | $C_3$ |
|---|---|---|---|---|
| nombre de feuilles | 21 | 22 | 21 | 22 |
| et | | | | |
| longueur de la plus grande feuille | 237 | 219 | 233 | 231 |
| (5 semaines après transplantation) | | | | |
| nombre de jours pour fleurir | 81 | 81 | 81 | 81 |

Ces résultats démontrent que les transplants produits selon l'invention, à des concentrations initiales de solution nutritive de 4 à 8 meq N/l ont un comportement normal, en particulier dans les domaines de la précocité, du nombre et de la taille des feuilles, la concentration qui semble la mieux adaptée étant $C_3$ (6 meq N/l).

Etant donné que, pour la grande majorité des tabacs cultivés industriellement, il faut prévoir, dans le bac, environ 0,1 l de solution par plante, la mise en oeuvre du procédé de l'invention suppose que l'on dispose alors de préparations nutritives permettant de disposer de 0,4 à 0,8 meq d'azote par plant à traiter, qui pourront être mises à la disposition des utilisateurs.

Après la transplantation, une partie des plants a été conservée sans addition de solution nutritive, donc dans des conditions de nutrition azotée nulle, le volume d'eau d'adduction dans le bac étant maintenu constant.

Les plants ont cessé leur croissance et ont progressivement jauni, ils sont également devenus moins aqueux, plus "durs".

Ces plants ont été repiqués après une attente de 37 jours.

Des plants témoins (mini-mottes traditionnelles) d'âge normal, ont été repiqués en alternance avec les plants conservés.

Le développement de ces tabacs a été régulier et tout à fait normal comme on peut en juger sur les mesures de feuilles ci-dessous

| Traitements | Longueur des feuilles | Largeur des feuilles |
|---|---|---|
| Te$^*$ | 623 | 322 |
| $C_1$ | 620 | 321 |
| $C_2$ | 618 | 296 |
| $C_3$ | 664 | 274 |

La croissance du plant est différente de celle obtenue dans les méthodes antérieures. Il va croitre rapidement du fait de l'azote disponible dans la solution, puis lorsque l'azote sera entièrement consommé, la plante va se durcir et même présenter un aspect chlorotique (les feuilles les plus développées jaunissent voire blanchissent). Cet aspect considéré comme un défaut jusqu'à présent, ne nuit pas, de manière surprenante, au développement ultérieur du plant. La tige a durci, elle est plus apte à la transplantation mécanique (moins de plants abimés, moins de déchets).

Le plant peut attendre alors plusieurs semaines dans cet état par maintien unique de l'apport en eau.

De préférence, 3 à 5 jours avant la plantation, on peut avantageusement réactiver la végétation en rajoutant dans le bac de l'ordre de 15 meq d'N/1 (ou 210 mg de N/l) sous forme de (NO3)2Ca. Dans ce cas, on accélère la reprise et on réduit le léger retard de développement.

On peut ainsi gagner 4 jours. Ceci est un avantage capital pour des plantations tardives, par exemple de type Virginie, dans des régions à arrière saison relativement froide qui rendent difficile l'atteinte de la maturité des tabacs.

Le procédé de l'invention de production de plant de tabac par flottation, avec contrôle de la nutrition azotée, destiné à maîtriser la croissance en phase de repiquage, convient à toutes les espèces de Nicotiana Tabacum, Rustica, Pétunoïdes, et leurs hybrides,ainsi qu'aux Solanées : pétunias, tomates, aubergines, piments.

Pour les nicotianées non destinées à la production de matière à fumer et les solanées la concentration en azote de la solution peut être choisie entre O.4 et 0.8 meq. par plante selon la taille du plant souhaité au repiquage en fonction du type de culture envisagé, plein champ ou pots.

## Revendications

1.  Procédé de production de plants de tabac en mini-mottes, aptes à la transplantation, dans lequel les mini-mottes, contenant les plantules sur terreau de support, sont placées sur un plateau qui flotte sur un bac contenant de l'eau dont le niveau est maintenu constant, caractérisé par le fait que l'eau du bac contient initialement la quantité totale de matière nutritive nécessaire au développement de la plante jusqu'à sa transplantation, le niveau de liquide dans le bac étant maintenu constant par apport d'eau uniquement.

2.  Procédé selon la revendication 1 dans lequel, 3 à 5 jours avant la transplantation, on ajoute de la matière nutririve dans l'eau du bac.

3.  Procédé selon la revendication 1 ou 2 dans lequel le terreau de la mini-motte présente une teneur en azote minéral faible et connue.

4.  Procédé selon la revendication 3 dans lequel le terreau a une teneur en azote minéral inférieur à 35 mg/litre de terreau.

5.  Procédé selon l'une des revendications 1 à 4 dans lequel l'eau du bac présente initialement une concentration en azote comprise entre 4 et 8 milliéquivalents d'azote par litre d'eau.

6.  Procédé selon la revendication 5 dans lequel la concentration initiale est 6 milliéquivalents d'azote par litre.

**Claims**

1. A process for the production of tobacco seedlings in mini-clods, able to be transplanted, in which the mini-clods containing the plantlets on support soil are placed on a tray which floats in a trough containing water kept at a constant level, characterised in that the water of the trough initially contains the total quantity of nutritive material necessary for the development of the plant until transplantation, the level of liquid in the trough being kept constant by addition of water only.

2. A process according to claim 1, in which 3 to 5 days before transplantation the nutritive material is added to the water of the trough.

3. A process according to claim 1 or 2, in which the soil of the mini-clod has a known and low mineral nitrogen content.

4. A process according to claim 3, in which the soil has a mineral nitrogen content lower than 35mg/litre of soil.

5. A process according to one of claims 1 to 4, in which the water of the trough initially has a nitrogen concentration of between 4 and 8 milliequivalents of nitrogen per litre of water.

6. A process according to claim 5, in which the initial concentration is 6 milliequivalents of nitrogen per litre.

**Patentansprüche**

1. Verfahren zur Produktion von Tabakpflanzen in Mini-Schollen, geeignet zum Verpflanzen, bei dem die Mini-Schollen, welche die Keimlinge auf Trägerhumuserde enthalten, auf einer Platte angeordnet werden, die auf einem Behälter schwimmt, welcher Wasser enthält, dessen Pegel konstant gehalten wird, dadurch gekennzeichnet, daß das Wasser des Behälters anfänglich die gesamte für die Entwicklung der Pflanze bis zu ihrer Verpflanzung erforderliche Menge an Nährstoffen enthält, wobei der Flüssigkeitspegel in dem Behälter durch die alleinige Zufuhr von Wasser konstant gehalten wird.

2. Verfahren nach Anspruch 1, bei dem 3 bis 5 Tage vor dem Verpflanzen dem Wasser des Behälters Nährstoffe zugesetzt werden.

3. Verfahren nach Anspruch 1 oder 2, bei dem die Humuserde des Mini-Scholles einen geringen und bekannten Gehalt an mineralischem Stickstoff aufweist.

4. Verfahren nach Anspruch 3, bei dem die Humuserde einen Gehalt an mineralischem Stickstoff von weniger als 35 mg/Liter Humuserde aufweist.

5. Verfahren nach einem der Ansprüche 1 bis 4, bei dem das Wasser des Behälters anfänglich eine Stickstoffkonzentration zwischen 4 und 8 Milliäquivalenten Stickstoff pro Liter Wasser aufweist.

6. Verfahren nach Anspruch 5, bei dem die anfängliche Konzentration 6 Milliäquivalente Stickstoff pro Liter ist.